# EUROPÄISCHE PATENTSCHRIFT

(11) **EP 3 011 235 B1**
(45) Veröffentlichungstag und Bekanntmachung des Hinweises auf die Patenterteilung: **09.08.2017**
(21) Anmeldenummer: 14734765.2
(22) Anmeldetag: 18.06.2014
(51) Int. Cl.: F24H 4/04, F24D 11/02, F28D 20/00

(54) **WÄRME- UND KÄLTEBEREITSTELLUNGSVORRICHTUNG SOWIE VERFAHREN ZUM BETREIBEN DERSELBEN**
DEVICE FOR PROVIDING HEAT AND COLD AND AN OPERATING METHOD FOR THE SAME
DISPOSITIF DE PRODUCTION DE CHALEUR ET DE FROID ET PROCÉDÉ POUR LE FAIRE FONCTIONNER

(30) Priorität: 19.06.2013 DE 102013106412
(43) Veröffentlichungstag der Anmeldung: 27.04.2016
(73) Patentinhaber: Hahn, Thomas, 61137 Schöneck (DE)
(72) Erfinder: Hahn, Thomas, 61137 Schöneck (DE)
(74) Vertreter: Katscher Habermann Patentanwälte
(86) Internationale Anmeldenummer: PCT/EP2014/062898
(87) Internationale Veröffentlichungsnummer: WO 2014/202698

(56) Entgegenhaltungen:
- EP-A2- 0 134 184
- WO-A2-2010/119142
- DE-A1-102008 049 954
- DE-A1-102009 052 559
- US-A1- 2010 230 071

## Beschreibung

Die Erfindung betrifft eine Wärme- und Kältebereitstellungsvorrichtung mit einem Wärmeträgermedium, das in einem Innenraum eines Speicherbehälters angeordnet ist, wobei in dem Innenraum des Speicherbehälters mindestens ein Wärmetauscher als Kondensator oder als Verdampfer einer Kreisprozessanlage angeordnet ist, und wobei die Wärme- und Kältebereitstellungsvorrichtung mindestens eine Strömungserzeugungseinrichtung aufweist, mit der an dem mindestens einen Wärmetauscher an mindestens einer seiner wärmeaustauschenden Oberflächen eine verstärkte thermische Konvektion des Wärmeträgermediums herbeigeführt werden kann.

Bei einer Wärme- und Kältebereitstellungsvorrichtung wird Wärme zwischen verschiedenen Bereichen umverteilt, wobei Wärmetauscher in getrennten Kammervolumen angeordnet und dort von einem Wärmeträgermedium umgeben sind. Die Wärmetauscher nehmen die Funktion von Verdampfer oder Kondensator einer Kältekreisprozessanlage ein, die nach dem Gegenstrom-, dem Kreuzstrom- oder dem Gleichstromverfahren arbeiten.

Gegenstrom- und Gleichstromwärmetauscher oder Kreuzgegenstromwärmetauscher sind meist abgeschlossene Vorrichtungen, die sich dadurch auszeichnen, dass die wärmeaustauschenden Medien in unterschiedlichen Kanälen aneinander vorbeiströmen, die jeweils durch Kanalwände getrennt sind. Dabei wird das wärmeabgebende Medium in einem ersten Kanal und das wärmeaufnehmende Medium in einem zweiten Kanal über wärmeaustauschende Wärmeübertragungsflächen aneinander vorbeigeführt, ohne dass es zu einem direkten Kontakt oder zu einer Vermischung der beiden Medien kommt.

Der Begriff Kreisprozessanlage bezeichnet hier alle Kältekreisprozesse sowie andere thermische Kreisprozesse, welche beispielsweise mittels eines Gases betrieben werden. Kältekreisprozesse umfassen hier alle Kreisprozesse, bei denen die Verdichtung mechanisch oder mittels thermischer Verdichter erfolgt. Dazu zählen Kältekreisprozesse mit einem Kältemittel sowie beispielsweise mit Wärmepumpen oder Kühlaggregaten, welche mittels mechanischen Verdichtern betrieben werden. Dazu zählen auch durch thermische Verdichtung betriebene Absorptionskreisprozesse oder Diffusionsabsorptionsprozesse.

Der Begriff Arbeitsstoff umfasst hier alle geeigneten Kältemittel und Arbeitsgase der Kreisprozessanlagen. Der Begriff Wärmeträgermedium umfasst alle für eine Speicherung und für einen Transport von Wärme geeigneten Wärmeträgermedien.

Bekannt sind Kreisprozessanlagen in Form von Wärmepumpen oder in Form von Kühlaggregaten zur Erzeugung von Nutzkälte, bei welchen jeweils der Verdampfer und der Kondensator einer Kreisprozessanlage innerhalb eines einzigen Speicherbehälters angeordnet sind.

Beispielsweise wird in EP 0134184 A2 eine Kreisprozessanlage als Wärmepumpe beschrieben, bei der sowohl der Verdampfer und der Kondensator jeweils direkt als Wärmetauscher innerhalb eines Speicherbehälters angeordnet sind. Als Vorteil einer solchen Vorrichtung kann eine vertikale Temperaturschichtung mit nach oben ansteigender Temperatur angesehen werden. Der Temperaturgradient stellt sich aufgrund der temperaturabhängigen Dichteunterschiede des Wärmeträgermediums im Speichermedium ein. Die beschriebene Vorrichtung kann die Funktion einer thermischen Solaranlage erfüllen. Erst bei nicht ausreichendem Kollektorwärmeertrag wird durch den Einsatz der Kreisprozessanlage eine Temperaturerhöhung innerhalb des Speichers erreicht. Die eingesetzte Kreisprozessanlage verrichtet in diesem Fall nur den vorteilhaften kleinen Temperaturhub der geforderten Temperaturerhöhung.

Ein möglichst kleiner Temperaturhub ist die effiziente Maßnahme zur Verbesserung der Gesamteffizienz von Kreisprozessanlagen.

Nachteilig bei der vorangehend beschriebenen Vorrichtung ist, dass die Wärmeübertragung von dem Kondensator an das Wärmeträgermedium und die Wärmeübertragung vom Wärmeträgermedium in den Verdampfer stark abhängig ist von der Bewegung des Wärmeträgermediums in einem räumlichen Bereich um den Kondensator und Verdampfer herum, also direkt in der unmittelbaren Umgebung um diese Wärmetauscher. Der beschriebene Wärmeaustausch würde schneller erfolgen, wenn auch das Wärmeträgermedium gegenüber den Oberflächen der Wärmetauscher eine Bewegung und damit einen kontinuierlichen konvektiven Austausch erfährt.

Ein weiterer Nachteil dieser Vorrichtung ist, dass Strömungen innerhalb des Speichers die vertikale Temperaturschichtung stören und es so zu Betriebszuständen kommt, bei denen die notwendige Temperaturdifferenz zwischen Verdampfer und Kondensator unterschritten wird, welche Voraussetzung für den Betrieb der Kreisprozessanlage ist.

Eine beispielsweise in EP 0 134 184 A2 beschriebene Vorrichtung wird möglicherweise aus diesem Grund in der Praxis nur selten eingesetzt.

Auch aus DE 10 2008 049 954 A1 ist eine Vorrichtung bekannt, bei der nicht näher beschriebene Wärmetauscher innerhalb eines Speicherbehälters angeordnet sind, welche in der Funktion als Kondensator und Verdampfer Teil einer Kreisprozessanlage sind. Darüber hinaus wird die Kopplung von zwei oder mehreren Kältekreisprozessanlagen gezeigt. Die Kopplung der Kreisprozessanlagen erfolgt in dieser Vorrichtung über das innerhalb des Speicherbehälters befindliche Wärmeträgermedium. Diese Vorrichtung erreicht damit den zumindest zeitweisen unabhängigen Betrieb von einzelnen Kreisprozessanlagen. Damit wird eine verbesserte Leistungsanpassung zum Beispiel im Teillastbetrieb ermöglicht. Der Teillastbetrieb ist die überwiegende Betriebsart vieler Kreisprozessanlagen, damit stellt sich dieser Vorteil vor allem über lange Betriebszyklen ein.

Bemerkenswert ist dieser Vorteil gegenüber anderen bekannten und häufiger eingesetzten Vorrichtungen. Bei der bekannten und bisher üblichen Kopplung in Kaskadenform ist der Kondensator einer ersten Kreisprozessanlage mit dem Verdampfer einer zweiten Kreisprozessanlage gekoppelt. In dieser Art gekoppelte Kreisprozessanlagen können nur parallel betrieben werden und müssen in der Leistung immer aufeinander abgestimmt sein. Die Leistung des ersten Kondensators muss immer von dem Verdampfer der gekoppelten Kreisprozessanlage aufgenommen werden.

Der Effizienzvorteil einer Leistungsanpassung durch den selektiven Betrieb einzelner Kreisprozessanlagen innerhalb des Speichers wird in dieser Vorrichtung kombiniert mit einem jeweils kleinen Temperaturhub jeder einzelnen Kreisprozessanlage. Durch die sich einstellende vertikale Temperaturschichtung infolge der temperaturabhängigen Dichteuterschiede im Wärmeträgermedium besteht der weitere Vorteil einer Nutzung von Wärme oder Nutzkälte unterschiedlicher Temperatur. Die Temperatur ist abhängig von der vertikalen Entnahmeposition im Speicher.

Nachteilig ist bei dieser Vorrichtung, dass sich in Abhängigkeit von lokalen Temperaturdifferenzen und der dadurch bewirkten Auf- und Abtriebskräfte eine unkontrollierbare Konvektion in einzelnen Bereichen des Wärmeträgermediums ergibt. Eine Anströmung der Verdampfer und Kondensatoren erfolgt durch die sich selbst einstellende Konvektion.

In EP 0 134 184 A2 wird eine andere Variante beschrieben. Hier wird eine Strömung dadurch erzeugt, dass das Wärmeträgermedium zum Zwecke des Wärmetransportes aus dem Speicher hinaus und wieder zurückbefördert wird.

Strömungen, welche über die Konvektion infolge der Schwerkraft innerhalb des Speichers verursacht werden, führen zu einer teilweisen Aufhebung der Temperaturschichtung innerhalb des Speichers. Eine Temperaturschichtung und ein vorgegebener Temperaturunterschied an Verdampfer und Kondensator ist jedoch die Voraussetzung für den Betrieb von Kreisprozessanlagen innerhalb eines Speicherbehälters. Die Verbesserung der lokalen Wärmeübertragung durch Konvektion bringt gleichzeitig den Nachteil mit sich, dass der vertikale Temperaturgradient vermindert wird.

Die Intensität der Wärmeübertragung an Kondensator und Verdampfer erfolgt abhängig von der Bewegung des Wärmeträgermediums und damit der Konvektion an den wirksamen Flächen der Wärmetauscher.

Wärmeübertragung erfolgt allgemein durch stationäre Wärmeleitung, durch Wärmestrahlung oder durch konvektiven Transport. Die unterschiedlichen Transportmechanismen treten auch in Kombination und in Wechselwirkung miteinander auf. Der Wärmeübergang von einem Körper an ein vorbeiströmendes Fluid ist ein Beispiel dafür. Direkt an der Oberfläche des Körpers haftet das Fluid abhängig von dessen Viskosität, in diesem Bereich der Grenzschicht wird die Wärme nur durch Wärmeleitung übertragen. Der Wärmestrom, d.h. die Intensität der Wärmeübertragung wird dabei trotzdem durch den konvektiven Transport beeinflusst. Erwärmtes Fluid wird durch Konvektion von der Wand, bzw. von der Grenzschicht weg transportiert. Durch einen schnelleren Transport vergrößern sich das Temperaturgefälle an der Wand und damit gleichzeitig auch der Wärmestrom.

Der Wärmestrom hängt von der Geschwindigkeit des Wärmeträgermediums und zudem von der Form der Oberflächen der Wärmestauscher ab.

Ohne jegliche Bewegung an der Oberfläche, also beispielsweise bei einem festen Wärmeträgermaterial, erfolgt der Wärmeaustausch nur durch Wärmeleitung. Bei einem flüssigen Wärmeträgermedium erfolgen durch die darin vorhandene Konvektion infolge der temperaturabhängigen Dichteunterschiede immer nur ein Anteil der Wärmeübertragung durch Wärmeleitung und ein weiterer Anteil durch Konvektion. Je besser der Austausch des Wärmeträgermediums an den Grenzflächen bzw. den Oberflächen ist, desto effizienter erfolgt die Wärmeübertragung. Eine bessere Wärmeübertragung hat den Vorteil, dass der notwendige Temperaturunterschied zwischen dem wärmeabgebenden und dem wärmeaufnehmenden Medium kleiner werden kann. Eine bessere Wärmübertragung an Verdampfer und Kondensator von Kreisprozessanlagen hat zur Folge, dass die Wärmeübertragung schon bei geringeren Temperaturdifferenzen erfolgt. Der notwendige Temperaturhub ergibt sich aus der Temperaturdifferenz der beteiligten Wärmeträgermedien. Kreisprozessanlagen mit gutem Wärmeübergang arbeiten mit einem kleineren Temperaturhub und steigern damit die Effizienz.

In DE 10 2012 112 347 wird eine Vorrichtung beschrieben, bei welcher vorteilhafterweise alle wesentlichen Komponenten einer oder mehrerer Kreisprozessanlagen innerhalb eines Sicherheitsspeichers angeordnet sind. Die Anordnung aller den Arbeitsstoff führenden Komponenten innerhalb eines Speichers ermöglicht die sichere Verwendung von giftigen und feuergefährlichen Arbeitsstoffen. Die Anforderungen an die Verwendung dieser Arbeitsstoffe wie beispielsweise Ammoniak, CO2 oder reinen Kohlenwasserstoffen wie Propan oder Butan ist streng geregelt und bedarf besonderen Sicherheitsvorkehrungen. Innerhalb geschlossener Gebäude wird beispielsweise in Haushaltskühlgeräten Propan, jedoch nur in kleinen Mengen verwendet. Ammoniak beispielsweise ist ein häufig verwendeter Arbeitsstoff der vorwiegend in Kreisprozessanlagen, welche im Freien stehen, verwendet wird. Die hier beschriebe Vorrichtung erlaubt es, diese Kältemittel innerhalb eines Sicherheitsbehälters zu verwenden. In Schadensfällen tritt der Arbeitsstoff nicht in die Umwelt, sondern verbleibt innerhalb des Speicherbehälters. Eine weitere dort beschriebene Sicherheitseinrichtung ist die Verwendung von Reaktionsstoffen oder Bindemitteln passend zum Arbeitsstoff. Im Schadensfall wird dann der Arbeitsstoff damit gebunden, neutralisiert oder chemisch verändert.

Diese Vorrichtung bedingt jedoch die Verwendung von Wärmetauschern, welche Wärme mit dem Wärmeträgermedium nur innerhalb des Speicherbehälters austauschen. Dabei müssen diese Wärmetauscher so ausgeführt sein, dass sie keine direkten Kontaktflächen außerhalb des Speicherbehälters zur Umgebung haben. Austretender Arbeitsstoff muss nach diesen Vorgaben immer innerhalb des Speichers verbleiben.

Als Aufgabe der Erfindung wird es angesehen, eine Wärme- und Kältebereitstellungsvorrichtung der eingangs genannten Gattung so zu verbessern, dass die Vorteile von direkt innerhalb eines Speicherbehälters wirkenden Kreisprozessanlagen kombiniert werden können mit besonders effizient wärmeübertragenden Wärmetauschern, welche sich bauartbedingt scheinbar nicht für diesen Einsatz eignen.

Diese Aufgabe wird erfindungsgemäß dadurch gelöst, dass mindestens eine Trennschicht innerhalb des Speicherbehälters den Innenraum des Speicherbehälters in mindesten zwei Bereiche unterteilt und die Strömungen des Wärmeträgermediums voneinander trennt, sodass die durch Temperaturunterschiede verursachte natürliche Konvektion und die durch die mindestens eine Strömungserzeugungseinrichtung verursachte thermische Konvektion in beiden Bereichen des Speicherbehälters unabhängig voneinander sind.

Ein aus zwei oder mehr Kammervolumen bestehender Wärmetauscher, wie beispielsweise ein Plattenwärmetauscher oder ein Rohrbündelwärmetauscher, welcher im Gegenstrom oder im Gleichstromprinzip arbeitet, muss zwangsweise mittels einer Strömungserzeugungseinrichtung von dem Wärmeträgermedium durchströmt werden. Gleichzeitig werden die negativen Auswirkungen auf die Temperaturschichtungen innerhalb des Speicherbehälters mit einer Trenneinrichtung kompensiert, und zusätzlich wird mittels des Wärmeträgermediums und dessen Strömungsgeschwindigkeit eine steuerbare Kompensation von Temperaturschwankungen der Massenströme aus Wärmequelle und Wärmsenke erreicht.

Wärmetauscher in dieser Form sind beispielsweise auch als Koaxialrohrwärmetauscher bekannt. Koaxialrohrwärmetauscher bestehen aus einem Innenrohr und einem das Innenrohr außen koaxial umgebend angeordneten Mantelrohr. Das Innenrohr wird von einem ersten Medium und der Raum zwischen Innenrohr und Mantelrohr von einem zweiten Medium durchströmt.

Weiterhin zählen dazu Rohrbündelwärmetauscher und Plattenwärmetauscher sowie viele andere. Plattenwärmetauscher weisen meist vier Rohranschlüsse auf, welche paarweise den Eingang und den Ausgang von zwei, durch Platten getrennte Innenvolumen bzw. Kanäle zugänglich machen. Plattenwärmetauscher bestehen aus einer Vielzahl einzelner Platten, welche wechselweise um 180 Grad gedreht miteinander verbunden werden. Dadurch bilden sich zwei voneinander unabhängige Strömungsräume, in denen die beiden Wärmeträgermedien im Gegenstrom geführt werden. Durch die Prägungen der einzelnen Platten oder deren strukturierte Oberflächen wird das durchfließende Medium zu einer turbulenten Strömung gezwungen. Der Wärmeübergang erfolgt an vergleichsweise großen Wärmetauschflächen in einem kompakten Gehäuse.

Strukturierte Oberflächen ermöglichen eine gezielt begünstigte turbulente Strömung und verringern so die Stärke der Grenzschichten mit vorwiegend laminarer Strömung. Im Gegensatz dazu verursachen glatte Flächen eine überwiegend laminare Strömung und damit dickere laminare Grenzschichten, durch die der Wärmetransport überwiegend durch Wärmeleitung erfolgt. Je dünner die laminaren Grenzschichten sind, desto besser ist die Wärmeübertragung.

Zunächst erscheint es vermeintlich wenig sinnvoll, innerhalb eines Speicherbehälters einen geschlossen Wärmetauscher wie etwa einen Plattenwärmetauscher einzusetzen, der einen Wärmeaustausch mit dem umgebenden Wärmeträgermedium herbeiführen soll. Um Gegen- oder Gleichstromwärmetauscher bestimmungsgemäß einsetzen zu können müssen die beiden voneinander getrennten Volumen innerhalb dieser Wärmetauscher durchströmt werden. In jeweils einer Kammer bzw. in jeweils einem Strömungsraum wird der Arbeitsstoff durch den Verdichter der Kreisprozessanlage bewegt. Ohne eine in geeigneter Weise angeordnete Strömungserzeugungseinrichtung würde der zweite Strömungsraum nur durch die sich infolge der Temperaturdifferenz an dem Eingang und an dem Ausgang des Strömungsraumes einstellende Konvektion durchströmt. Dies würde gerade nicht zu einer gewünschten besseren Wärmeübertragung führen, da die sich selbst einstellende Strömung innerhalb des Wärmetauschers aufgrund der Strömungswiederstände durch den beengten Zugang und die Innenraumverschachtelung nicht ausreichend ist.

Erfindungsgemäß wird die Durchströmung der Wärmetauscher durch mindestens eine Strömungserzeugungseinrichtung zum Beispiel in Form von einer in dem Innenraum des Speicherbehälters angeordneten Pumpe erreicht. Vorzugsweise wird für jeden Wärmetauscher eine gesonderte Strömungserzeugungseinrichtung verwendet. Dazu wird beispielsweise mittels einer Umwälzpumpe das Wärmeträgermedium durch den zugeordneten Wärmetauscher gepumpt.

Erfindungsgemäß können die Umwälzpumpen außerhalb des Speichermediums angeordnet sein und das Speichermedium mittels Rohrleitungen durch den Wärmetauscher innerhalb des Speichermediums pumpen. Eine andere mögliche Anordnung besteht darin, den Antrieb der Umwälzpumpe außerhalb des Speichers anzuordnen und die Kraft über eine gedichtete Welle oder über eine magnetische Kupplung zum Pumpkörper innerhalb des Speichers und damit innerhalb des Wärmeträgermediums zu leiten.

Einfach und kostengünstig verfügbar und für diesen Zweck einsetzbar sind beispielsweise Unterwasserpumpen. Dabei unterscheidet man gedichtete und hermetisch dichte Pumpen. Gedichtet bedeutet, dass eine Trennung zwischen elektrischem Antrieb und Pumpenkörper durch eine Wellendichtung erreicht wird. Hermetisch dichte Pumpen erreichen den Antrieb über Magnetkräfte ohne Wellendichtung, dabei hat der elektrische Antriebsteil keinen Kontakt zum Wärmeträgermedium. Die Pumpwirkung wird beispielsweise durch das Material eines Spaltrohres magnetisch vom elektrischen Antrieb an den Pumpkörper übertragen.

Der Einsatz von Umwälzpumpen, welche das Wärmeträgermedium bewegen, könnte die vertikale Temperaturschichtung innerhalb eines Speicherbehälters stören. Erfindungsgemäß wird durch mindestens eine horizontale Trennschicht zwischen dem unteren Bereich, in dem ein oder mehrere Verdampfer angeordnet sind, und dem oberen Bereich, in dem ein oder mehrere Kondensatoren angeordnet sind, eine Durchmischung verhindert. Durch die Abtrennung der beiden Bereiche wird die für Kreisprozessanlagen erforderliche Temperaturdifferenz zwischen Verdampfer und Kondensator ermöglicht.

Erfindungsgemäß befindet sich die Trennschicht innerhalb des Speicherbehälters und erreicht die Trennung beider Volumen. Diese Trennung kann für viele Anwendungsfälle vollständig erfolgen.

Die in EP 0 134 184 A2 und DE 10 2008 049 954 A1 beschriebenen Vorrichtungen erfordern jedoch, in ihrer jeweiligen Verwendungsvariante als Solarthermievorrichtung, eine Durchlässigkeit für aufsteigende Strömungen des Wärmeträgermediums innerhalb des Speichers. Auch in anderen Anwendungsfällen kann eine Durchlässigkeit oder eine poröse Struktur der Trennschicht vorteilhaft sein.

Die Strömung, hervorgerufen durch Dichteunterschiede, ist im Vergleich zu den durch Umwälzpumpen hervorgerufenen Strömungen vergleichsweise langsam. Erfindungsgemäß ist es für viele Anwendungsfälle ausreichend eine thermische Trennung beider Volumen mittels einer flüssigkeitsdurchlässigen horizontalen Trennschicht zu erreichen. Diese durchlässige Trennschicht bewirkt, dass Strömungen innerhalb eines oberen Bereiches eines Speicherbehälters und innerhalb eines unteren Bereiches eines Behälters, weitgehend unabhängig voneinander strömen. Verwirbelungen oder Strömungen werden nur in sehr geringem Umfang von einem der getrennten Bereiche auf den anderen Bereich übertragen. Gleichzeitig ist diese Trennschicht für aufsteigende und vergleichsweise langsame Strömungen des Wärmeträgermediums durchlässig. Beispielsweis bei abgeschalteten Umwälzpumpen in der Funktion als Solarthermieanlage.

Erfindungsgemäß kann diese Trennschicht aus einer Abdichtung mit kleinen Löchern oder einem offenporigen, für das Wärmeträgermedium, durchlässigen Material bestehen.

Gemäß einer weiteren vorteilhaften Ausgestaltung der Erfindung ist vorgesehen, dass diese Trennschicht aus einem einfachen Lochblech besteht.

In einer weiteren Ausgestaltung der Erfindung kann als Trennschicht ein flüssigkeitsdurchlässiges Vlies, ein Gummi oder ein Schaumgummi verwendet werden, der vorzugsweise auf einem Trägermaterial angeordnet ist.

Erfindungsgemäß ist weiterhin vorgesehen, dass eine geschlossene Trennschicht mittels Klappen oder Ventilen für eine vertikale Strömung durchlässig gemacht wird. Die Klappen oder Ventile können aktiv gesteuert werden oder selbsttätig durch Temperatur- oder Druckunterschiede bewegt werden.

Dabei bedeutet aktiv gesteuert, dass Klappen oder Ventile beispielweise elektromagnetisch angetrieben oder mechanisch bewegt werden. Die Betätigung der Klappen oder Ventile kann auch über die Temperaturdifferenz oder durch die Auftriebskraft des Wärmeträgermediums erfolgen. Beispielsweise können Klappen so angesteuert oder zur Klappenbetätigung verwendete Bimetall-Federn so ausgelegt werden, dass es zur Öffnung der Klappen erst nach dem Erreichen einer vorbestimmten Temperaturdifferenz kommt, die sich zwischen den beiden abgetrennten Bereichen des Speicherbehälters einstellt. Diese Temperaturdifferenz ist erfindungsgemäß immer größer als die notwendige minimale Temperaturdifferenz zwischen Verdampfer und Kondensator zur Funktionssicherung der eingebauten Kreisprozessanlagen.

Eine weiter erfindungsgemäße Lösung besteht darin, Klappen aus leicht verformbarem Material zu verwenden die sich bei den vorgesehenen Temperaturen und Drücken infolge der aufsteigenden Strömung durch eine Verformung öffnen. Beispielsweise können dafür dünne Kunststoffplatten verwandt werden, welche jeweils nur an einer Kante befestigt sind und sich unter Krafteinwirkung aufbiegen.

Die Verwendung von steuerbaren Umwälzpumpen zum Wärmetransport an Kondensator und Verdampfer hat höhere Investitionskosten der Anlage zur Folge. Es erhöhen sich die Kosten für die Wärmetauscher selbst und zusätzlich entstehen Kosten für die Umwälzpumpen. Unterwasserpumpen sind zudem innerhalb eines Speicherbehälters schlecht zu wartende Fehlerquellen und zusätzliche Energieverbraucher.

Diesen Nachteilen stehen die Effizienzvorteile eines niedrigeren Temperaturhubes der Kreisprozessanlagen infolge eines verbesserten Wärmeübergangs, und weitere nachfolgend geschilderte Vorteile, entgegen.

Erfindungsgemäß eröffnen sich durch den Einsatz von steuerbaren Umwälzpumpen neue, die Effizienz von Kreisprozessanlagen verbessernde, Vorteile.

Bei herkömmlichen Kreisprozessanlagen welche außerhalb eines Speicherbehälters angeordnet sind und mit abgeschlossenen Wärmetauschern wie beispielsweise Plattenwärmetauschern ausgestattet sind, stellt sich der folgende Nachteil ein.

Einer der beiden Massenströme in einem Kammervolumen des Wärmetauschers ist der Massestrom des Arbeitsstoffes welcher in Abhängigkeit von der Arbeit des Verdichters der Kreisprozessanlage durch den Wärmetauscher strömt.

Die Größe des Massenstromes des Arbeitsstoffes im Kondensator ist abhängig von der Arbeit des Verdichters. Der Massenstrom des Arbeitsstoffes im Verdampfer ist zusätzlich abhängig von den Einstellungen des Expansionsventiles.

Nachteilig bei bisherigen Kreisprozessanlagen dieser Art ist, dass die Massenströme des Wärmeträgermediums, welches die externen Wärmetauscher durchströmt, nicht direkt durch die Kreisprozessanlage beeinflusst werden können. Das Wärmeträgermedium bringt Wärme niedriger Temperatur zum Verdampfer und führt Wärme höherer Temperatur vom Kondensator weg. Die Umwälzung des Wärmeträgermediums und die Geschwindigkeit der Umwälzung betreffen immer gleichzeitig einen Plattenwärmetauscher und den Wärmetauscher der Wärmequelle oder der Wärmesenke. Eine unabhängige Umwälzgeschwindigkeit im Plattenwärmetauscher ist nicht möglich. Schwankungen des Wärmetransportes, zum Verdampfer hin und vom Kondensator weg, führen immer zu zeitweilig ungünstigen Betriebsbedingungen oder sogar zu Betriebsstörungen der Kreisprozessanlage.

In DE 102008049954 A1 und in DE 102012112347.0 wird die Kopplung von zwei oder mehreren Kreisprozessanlagen beschrieben. Dabei erfolgt die Kopplung über das Wärmeträgermedium. Erfindungsgemäß werden nun Vorrichtungen dieser Art mit geschlossenen Wärmetauschern für einzelne Kreisprozessanlagen ausgestattet. Beispielweise sind für zwei gekoppelte Kreisprozessanlagen jeweils zwei Verdampfer und zwei Kondensatoren erforderlich. Im Gegenzug zu dem konstruktiven Mehraufwand kann durch eine erste Umwälzpumpe die erforderliche Durchströmung von beiden Verdampfern und durch eine zweite Umwälzpumpe die Durchströmung von beiden Kondensatoren vorgegeben bzw. günstig beeinflusst werden. Dazu werden jeweils zwei Verdampfer und zwei Kondensatoren auf der Strömungsseite des Wärmeträgermediums hydraulisch in Reihe zusammengeschlossen. Es ist ebenfalls möglich, dass jeder einzelne geschlossene Wärmetauscher, welcher aus zwei oder mehreren Kammern besteht, auch separat mit einer zugeordneten Umwälzpumpe ausgestattet ist.

Für eine Vorrichtung mit nur einer Umwälzpumpe für zwei oder mehr Wärmetauscher können für diejenigen Betriebszustände, in denen nur eine von beispielsweise zwei Kreisprozessanlagen in Betrieb ist, nur beide Verdampfer und Kondensatoren mit der einen Umwälzpumpe beströmt bzw. angeströmt werden. Der Energieaufwand für eine derartige Umwälzung des Wärmeträgermediums ist im Vergleich zur Kompression vernachlässigbar. Zudem können keine Wärmeverluste des Wärmetauschers aus dem System austreten und verloren gehen, da diese Wärme innerhalb des Speicherbehälters nutzbar bleibt.

Erfindungsgemäß können in einer weiteren Variante der Erfindung auch die Wärmetauscher, welche den Wärmeaustausch mit Wärmesenke und Wärmequelle bewirken, als Wärmetauscher mit verschiedenen Kammern ausgebildet sein. Diese Wärmetauscher für Wärmesenken und Wärmequellen können jeweils in Reihe mit den Kondensatoren und Verdampfern hydraulisch angeschlossen werden. Dabei reduziert sich die Anzahl der Umwälzpumpen auf nur zwei, welche dann beispielsweise in jeweils drei Plattenwärmetauschern das Wärmeträgermedium umwälzen.

Erfindungsgemäß können alternativ auch in einer solchen Anordnung jeweils einzelne Umwälzpumpen für jeden Wärmetauscher verwandt werden.

Die Erfindung betrifft auch ein Verfahren zum Betreiben von Wärme- und Kältebereitstellungsvorrichtungen mit einem Wärmeträgermedium, das in einem Innenraum eines Speicherbehälters angeordnet ist, wobei im Innenraum des Speicherbehälters mindestens ein Wärmetauscher als Kondensator oder als Verdampfer einer Kreisprozessanlage angeordnet ist.

Erfindungsgemäß ist vorgesehen, dass mit einer Strömungserzeugungseinrichtung eine hinsichtlich der Intensität und der Richtung steuerbare Beströmung erzeugt wird, mit der die Intensität des Wärmeaustausches von dem mindestens einen Wärmetauscher mit dem diesen umgebenden Wärmeträgermedium beeinflusst wird. Bei Wärme- und Kältebereitstellungsvorrichtungen, bei denen mindesten ein Verdampfer oder mindestens ein Kondensator mindestens einer Kreisprozessanlage innerhalb eines Speicherbehälters angeordnet ist und bei denen Wärmetauscher als Kondensator oder als Verdampfer verwendet werden, welche mehr als einen Strömungsraum aufweisen, werden diese Wärmetauscher durch eine Strömungserzeugungseinrichtung einer erzwungenen Konvektion mit dem Wärmeträgermedium ausgesetzt.

Erfindungsgemäß bewirkt eine Steuerungseinrichtung mit der Inbetriebnahme der mindestens einen Strömungserzeugungseinrichtung beispielsweise in Abhängigkeit von gemessenen Temperaturen innerhalb des Innenraums des Speicherbehälters oder im Bereich um die Wärmetauscher eine Änderung der Intensität der Wärmeübertragung zwischen dem Wärmeträgermedium des Speicherbehälters und dem Arbeitsstoff der Kreisprozessanlagen.

Dabei führt die Änderung der Strömungsgeschwindigkeit des Wärmeträgermediums bei Vorrichtungen mit mehr als einer Kreisprozessanlage innerhalb des Speicherbehälters zu einer Änderung der Wärmeübertragung zwischen gekoppelten Kreisprozessanlagen.

Anhängig von beispielsweise durch Temperatursensoren gemessenen Temperaturen des Arbeitsstoffes und des Wärmeträgermediums im Bereich der Verdampfer und im Bereich der Kondensatoren wird die Wärmeübertragung zwischen diesen Medien durch die Geschwindigkeit der Umwälzung des Wärmeträgermediums geregelt. Erfindungsgemäß wird die Regelung der Wärmeübertragung vorzugsweise getrennt für die Bereiche der Verdampfer und für die Bereiche der Kondensatoren durchgeführt.

Dabei kann diese Regelung der Temperaturübertragung zwischen jedem einzelnen Wärmetauscher und dem Wärmeträgermedium getrennt, mit jeweils einzeln zugeordneten Strömungserzeugungseinrichtungen, ausgeführt werden.

Gemäß einer besonders effizienten Ausgestaltung des Verfahrens werden durch die Steuerungseinrichtung auch die steuerbaren Parameter der Kreisprozessanlagen in die Regelung mit einbezogen. Vorteilhafterweise werden in dieser Ausgestaltung der Erfindung die Druck- und Temperatursensoren der Kreisprozessanlagen genutzt um die Kreisprozessanlagen an die dynamischen Änderungen des Wärmestromes von Wärmequellen und Wärmesenken anzupassen. Beispielsweise wird durch Steuerungseinrichtung eine Leistungsanpassung der Kältekreisprozesse erreicht. Die Leistungsanpassung erfolgt beispielsweise durch die Drehzahlregulierung eines oder mehrerer Kreisprozessanlagen.

Vorteilhafterweise können alle bekannten Regelmechanismen zur Leistungsregelung von Kreisprozessanlagen verwandt werden. Erfindungsgemäß kann die Leistungsanpassung der Kreisprozessanlagen auch darin bestehen, dass einzelne Kreisprozessanlagen innerhalb der Kaskade ein oder ausgeschaltet werden.

Dabei kann zu diesen Regelgrößen zusätzlich eine weitere Regelgröße berücksichtigt bzw. eingesetzt werden, die sich mit der zeitweisen Öffnung der Trennschicht ergibt. Die zeitweise Öffnung der Trennschicht bewirkt eine Angleichung der Temperaturbereiche von Verdampfer und Kondensatorseite. Dies bewirkt eine Leistungsreduktion bei gleichzeitig geringerem Temperaturhub der Kreisprozessanlagen.

Erfindungsgemäß kann der Wärmeaustausch aller Wärmetauscher mit dem Wärmeträgermedium einzeln geregelt werden. Diese Regelung erfolgt über den Betrieb an sich, sowie über die Intensität des Betriebes jeder einzelnen Strömungserzeugungseinrichtung. Vorteilhafterweise können die dynamischen Wärmeströme aus den angeschlossenen Wärmequellen und Wärmesenken, sowie die dynamischem Wärmeströme des Wärmeträgermediums innerhalb des Speicherbehälters so reguliert werden, dass die parallele Regelung der Arbeitsmittelkreisläufe der Kreisprozessanlagen einen kontinuierlichen Betrieb derselben ermöglicht.

Eine vorteilhaften Ausgestaltung des Erfindungsgedankens zufolge erfolgt die Ansteuerung der beschriebenen Regelparameter in engen Zeittakten. Jede Kälteanlage und jede Wärmepumpe unterliegt tageszeitlichen und jahreszeitlichen Schwankungen der Temperaturen von Wärmsenken und Wärmequellen.

Beispielsweise erfordern auch unterschiedliche Umweltbedingungen jeweils andere Einstellungen der Regelgrößen, welche dann zu einem effizienten Betrieb führen können.

Das erfindungsgemäße Verfahren der regelbaren Anströmung der Verdampfer und Kondensatoren, welche im Innenraum eines Speicherbehälters angeordnet sind, ermöglicht die Regulierung der Intensität des Wärmeaustausches der Kreisprozessanlagen mit dem Wärmeträgermedium. Das Wärmeträgermedium übernimmt mit seiner Wärmekapazität dabei eine Pufferfunktion zwischen den Kreisprozessanlagen und den Wärmesenken und den Wärmequellen.

Erfindungsgemäß übernimmt das Wärmeträgermedium im Falle einer Vorrichtung, welche mit zwei oder mehreren Kreisprozessanlagen innerhalb des Speicherbehälters ausgestattet ist, die Funktion eines dynamischen thermischen Puffers. Dieser Puffer ermöglicht durch die Regulierung der Umwälzgeschwindigkeit des Wärmeträgermediums in Verdampfer oder Kondensator eine Leistungsanpassung von gekoppelten Kreisprozessanlagen über das Wärmeträgermedium.

In einer weiteren Variante des erfindungsgemäßen Verfahrens ergibt sich mit der Regulierung der Durchlässigkeit der Trennschicht innerhalb des Speicherbehälters eine neue Möglichkeit zur Verbesserung der Betriebsbedingungen von dort eingebauten Kreisprozessanlagen. Die zeitweise Öffnung der Trennschicht bewirkt eine Temperaturangleichung der beiden Bereiche im Speicherbehälter. Damit verringert sich in Abhängigkeit von der Zeitdauer der Öffnung die Temperaturdifferenz zwischen den Verdampfern und den Kondensatoren der Kreisprozessanlagen. Eine geringere Temperaturdifferenz zwischen Verdampfer und Kondensator ermöglicht den Betrieb von Kreisprozessanlagen mit geringerem Temperaturhub.

In einem geschlossenen Zustand der Trennschicht können eventuell nachteilige Auswirkungen von Strömungserzeugungseinrichtungen auf eine Temperaturschichtung innerhalb des Speicherbehälters kompensiert werden. Die Temperaturdifferenz zwischen dem Bereich der Verdampfer und dem Bereich der Kondensatoren, die sich durch den Betrieb der Kreisprozessanlagen ergibt, bleibt erhalten.

Erfindungsgemäß übernimmt das Wärmeträgermedium mit seiner Wärmekapazität eine ausgleichende Funktion für einen damit gleichmäßigeren Betrieb beteiligter Kreisprozessanlagen.

Durch die vorangehend beschriebenen Steuerungseingriffe und durch die dadurch gezielt herbeigeführten Temperaturänderungen innerhalb der beiden Teilvolumen des Speicherbehälters übernimmt das darin befindlichen Wärmeträgermedium eine Pufferfunktion für Schwankungen, sodass die betreffenden Kreisprozessanlagen über längere Betriebszyklen unter gleichmäßigeren Betriebsbedingungen arbeiten können.

Erfindungsgemäß können Temperaturänderungen sowohl im Bereich der Verdampfer als auch im Bereich der Kondensatoren durch verschiedene Steuerungseingriffe erzeugt werden.

Beispielsweise führen die zeitweilige Öffnung der Trennschicht und die damit verbundene dichteabhängige aufsteigende Strömung des Wärmeträgermediums zur Verminderung der Temperaturdifferenz der abgetrennten Bereiche. Damit steigt die Temperatur im Bereich der Verdampfer und in der Umgebung der Kondensatoren. Für das Beispiel einer Wärmepumpe kann ein Regeleingriff dieser Art sinnvoll sein, wenn die Temperatur der Wärmequelle ansteigt der Wärmebedarf abnimmt. Durch diesen Regeleingriff kann die Kreisprozessanlage mit einem geringeren Temperaturhub effizienter betrieben werden.

Erfindungsgemäß können weitere Steuerungseingriffe über die Ansteuerung der Strömungserzeugungseinrichtungen erreicht werden.

In dem oben angeführten Beispiel einer Wärmepumpe lässt sich die Pufferfunktion wie folgt erklären. Umweltwärmetauscher als Wärmequelle einer Wärmepumpe sind häufigen Temperaturschwankungen ausgesetzt. Diese Temperaturschwankungen treten häufig auch in kurzen Zyklen auf, beispielsweise bei unstetiger Bewölkung oder sich ändernden Windgeschwindigkeiten. Beispielsweise wird die schnelle Temperaturabsenkung der Wärmequelle, verursacht durch eine vorbei ziehende Wolkendecke, durch eine höhere Strömungsgeschwindigkeit des Wärmeträgermediums im Verdampfer teilweise ausgeglichen. Die schnellere Umwälzung erhöht den Wärmetransport am Verdampfer. Eine etwas geringere Temperatur des Wärmestromes wird durch eine größere Masse in begrenztem Umfang ausgeglichen.

Erfindungsgemäß sorgt der Wärmepuffer, der sich durch Wärmekapazität des innerhalb des Speichers umgewälzten Wärmeträgermediums ergibt, dafür, dass die Kreisprozessanlage für längere Zyklen im Bereich ihrer optimalen Betriebspunkte und in optimalen Bereichen des Kennfeldes laufen kann. Erreicht wird diese ausgleichende Funktion durch die Steuerung der Umwälzpumpen und damit der Umwälzgeschwindigkeit des Wärmeträgermediums durch den jeweiligen Wärmetauscher. Je höher die Umwälzgeschwindigkeit, desto schneller ist der Wärmeaustausch infolge erhöhter Konvektion mit dem Wärmeträgermedium. Temperaturschwankungen, welche von außen durch die Wärmequelle oder die Wärmesenke in den Speicher übertragen werden, haben somit keinen unmittelbaren Einfluss auf Verdampfer und Kondensator.

Damit erfüllt der Puffer in Verbindung mit einer oder mehreren Umwälzpumpen die Funktion eines dynamischen Puffers. Abhängig von der Ansteuerung der Umwälzpumpen kann der Massenstrom des Wärmeträgermediums durch die Verdampfer und Kondensatoren variiert werden, sodass jeweils in Abhängigkeit der Verdampfer- und Kondensatortemperaturen eine Optimierung der Verdampfung und Kondensation der Kreisprozessanlagen erreicht wird.

Erfindungsgemäß ist die Steuerung der Intensität des Wärmeaustausches zwischen den Wärmetauschern der Kreisprozessanlagen und dem Speichermedium eine neue Regelgröße für Kreisprozessanlagen nach dem oben beschriebenen Prinzip.

Durch die Ansteuerung der Strömungserzeugungseinrichtungen ergeben sich eine neue Möglichkeiten, den Wärmestrom zwischen einer Wärmequelle und der Kreisprozessanlage sowie zwischen einer Wärmesenke und der Kreisprozessanlage auszugleichen. Der Ausgleich kommt durch die variable Nutzung der thermischen Speicherkapazität des Wärmeträgermediums innerhalb des Speicherbehälters zustande. Durch die Intensität der Strömung des Wärmeträgermediums durch die Kondensatoren und Verdampfer wird gleichzeitig die Intensität des Wärmeaustausches zwischen diesen Komponenten verstärkt oder verringert.

Erfindungsgemäß wird durch die Ansteuerung der Strömungserzeugungseinrichtungen auch die Kopplung von unterschiedlichen Kreisprozessanlagen innerhalb des Speicherbehälters reguliert. Die Intensität der Förderung des Wärmeträgermediums durch die Verdampfer und die Kondensatoren gekoppelter Kreisprozessanlagen beeinflusst die Wärmeübertragung zwischen diesen gekoppelten Kreisprozessanlagen. Kreisprozessanlagen, welche über das Wärmeträgermedium innerhalb des Speicherbehälters gekoppelt sind, können über die Intensität der Wärmeübertragung während des Betriebes in der Leistung aufeinander abgestimmt werden. Beispielweise bewirkt die getrennte Variation der Fördergeschwindigkeit des Wärmeträgermediums durch zwei über dieses Wärmeträgermedium gekoppelte Kondensatoren auch gleichzeitig eine Variation der Leistungsanteile der beiden über die Kondensatoren gekoppelten Kreisprozessanlagen. Ähnlich wirkt es sich bei gekoppelten Verdampfern aus. Durch die Variation der Strömungsgeschwindigkeit in den Verdampfern variiert dort die Temperatur der Wärmequelle. Durch eine hohe Strömungsgeschwindigkeit in einem ersten Verdampfer kann dort ein hoher Wärmestrom aus der Wärmequelle genutzt werden. Hingegen verschiebt eine geringe Strömungsgeschwindigkeit in einem ersten Verdampfer den Wärmestrom zugunsten des zweiten Verdampfers und damit zugunsten der zweiten gekoppelten Kreisprozessanlage. Der Betrieb der Strömungserzeugungseinrichtungen ist demzufolge eine neue Regelgröße für die Kopplung von Kreisprozessanlagen.

Einer Ausgestaltung des Erfindungsgedankens zufolge ist die Auslegung einer strömungsbehindernden Trennschicht zwischen einem oberen und einem unteren Bereich im Speicherbehälter eine weitere neue Auslegungs- und Regelgröße für Kreisprozessanlagen in einer der oben beschriebenen Anordnungen. Eine verhältnismäßig durchlässige Trennschicht bedingt eine geringere Temperaturdifferenz, zwischen einem oberen und einem unteren Bereich im Speicherbehälter, als eine vergleichsweise dichtere Trennschicht. Die dichtere Trennschicht behindert die vertikale, durch Dichteunterschiede im Wärmeträgermedium verursachte, Strömung mehr als eine vergleichsweise durchlässigere Trennschicht.

Erfindungsgemäß ergibt sich durch die Ansteuerung der verschließbaren Öffnungen innerhalb der Trennvorrichtung zwischen einem oberen und einem unteren Bereich des Speicherbehälters eine neue weitere Steuerungsgröße für Kreisprozessanlagen. Durch die Öffnung der Trennschicht kommt es zu einer Temperaturangleichung zwischen dem oberen und dem unteren Bereich des Speicherbehälters. Durch Verschließen der Trennschicht vergrößert sich die Temperaturdifferenz zwischen einem oberen und einem unteren Bereich des Speicherbehälters. Die Steuerung der Öffnungen der Trennschicht beeinflusst damit die Betriebsbedingungen der Kreisprozessanlagen. Über die Steuerung der Kreisprozessanlagen kann durch die Ansteuerung der Öffnungen in der Trennschicht wiederum direkt Einfluss auf den Betrieb der Kreisprozessanlagen genommen werden. Der hier aufgezeigte neue Regelparameter stellt eine neue Regelgröße für Kreisprozessanlagen der oben beschriebenen Art dar. Der Temperaturhub der Kreisprozessanlage kann durch die Steuerung der Temperaturdifferenz des Wärmeträgermediums in der Umgebung von Verdampfern und Kondensatoren angepasst werden. Die Anpassung des Temperaturhubes durch die teilweise Durchmischung des Wärmeträgermediums ermöglicht die Optimierung des Betriebes der Kreisprozessanlagen mit vergleichsweise gleichmäßigeren Betriebsbedingungen. Die steuerbare zeitweise Durchmischung des Wärmeträgermediums gleicht Temperaturschwankungen, die zwangsläufig durch den Betrieb der Kreisprozessanlagen innerhalb eines Speicherbehälters entstehen, aus.

Nachfolgend werden die neuen Regelgrößen der Erfindung nochmals im Detail beschrieben.

Durch den erfindungsgemäßen Einsatz von geschlossenen Wärmetauschern wie beispielsweise Plattenwärmetauschern mit angeschlossenen hermetisch dichten Umwälzpumpen ist die Variation der Strömungsgeschwindigkeit des Wärmeträgermediums eine neue Regelgröße für Kreisprozessanlagen. Zunehmende Strömungsgeschwindigkeit hat eine höhere Konvektion und eine schnellere Wärmeübertragung zur Folge. Innerhalb der physikalisch sinnvollen Grenzen kann damit die Temperaturdifferenz zwischen dem Wärmeträgermedium innerhalb des Speicherbehälters und jeweiligen Verdampfer oder Kondensator für einen vorteilhaften Betrieb der Kreisprozessanlage eingestellt werden. Das Wärmeträgermedium erfüllt hier mit seiner Wärmekapazität die Funktion eines thermischen Puffers.

Im Falle einer Kopplung mehrerer Kältekreisprozessanlagen kann durch den Einsatz einzelner Umwälzpumpen an den jeweiligen Verdampfern und Kondensatoren eine Leistungsanpassung erreicht werden. Dazu wird durch die Intensität der Durchströmung mit dem Wärmeträgermedium eine Temperaturanpassung in dem damit möglichen Umfang erreicht.

Erfindungsgemäß ergibt sich durch die Auslegung und Steuerung der Trennschicht innerhalb des Speichers ein weiterer neuer Parameter für Auslegung und Optimierung von Kreisprozessanlagen. Die Auslegung der Durchlässigkeit für die temperaturabhängige vertikale Bewegung des Wärmeträgermediums hat direkten Einfluss auf die Temperaturdifferenz zwischen den jeweiligen Verdampfern und Kondensatoren der Kreisprozessanlagen. Die Durchlässigkeit sollte beispielsweise in dem Anwendungsfall einer thermischen Solaranlage diese Funktion ohne den Einsatz der Kreisprozessanlagen ermöglichen. Gleichzeitig soll die in diesem Maße durchlässige Trennschicht die durch Umwälzpumpen erzeugten Strömungen soweit im Bereich der Verdampfer und der Kondensatoren voneinander trennen, dass die zum Betrieb der Kreisprozessanlagen notwendigen Temperaturdifferenzen erhalten bleiben.

Erfindungsgemäß ermöglich die gezielte zeitweilige Öffnung von Ventilen oder Klappen innerhalb der Trennschicht eine weitere Regelgröße für derartige Kreisprozessanlagen. Durch die Öffnung kommt es zu einer Temperaturangleichung zwischen den Bereichen der Verdampfer und der Kondensatoren. Die neue regelbare Größe wird erfindungsgemäß dazu genutzt, den Temperaturhub der Kreisprozessanlagen ausgleichend zu beeinflussen. Äußere Temperaturschwankungen aus Wärmequelle oder Wärmesenke werden durch diese Regelgröße in Abhängigkeit der thermischen Kapazität des Wärmeträgermediums ausgeglichen.

Sowohl die steuerbare Variation der Strömungsgeschwindigkeiten als auch die steuerbare Öffnung der Trennschicht dienen dazu, Betriebsbedingungen der Kreisprozessanlagen zu erreichen, die über längere Betriebszyklen gleichmäßige und effiziente Betriebsbedingungen schaffen.

Weitere vorteilhafte Ausgestaltungen der erfindungsgemäßen Wärme- und Kältebereitstellungsvorrichtung werden anhand von in der Zeichnung dargestellten Ausführungsbeispielen näher erläutert. Es zeigt:

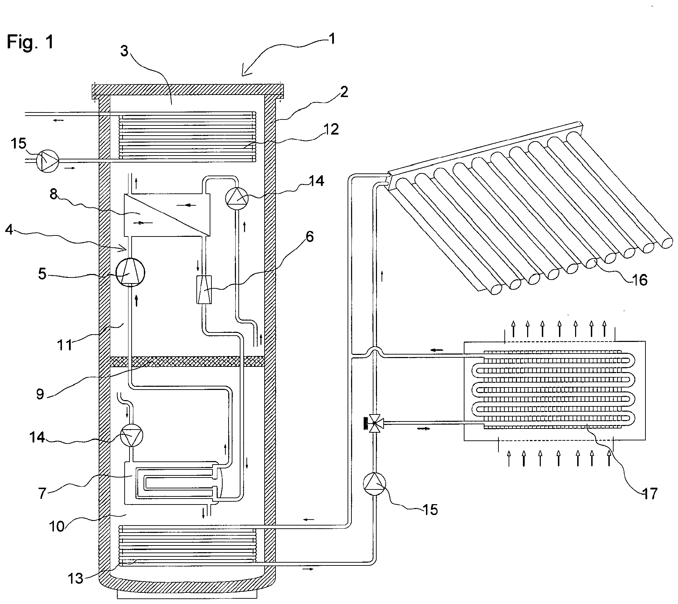

Fig. 1 eine Solarthermieanlage mit zusätzlichem Luftwärmetauscher und einer innerhalb des Speicherbehälters eingebauten Kältekreisprozessanlage, wobei die zur Kreisprozessanlage gehörigen Verdampfer und Kondensatoren jeweils mit einer Strömungserzeugungseinrichtung in Form einer Pumpe verbunden sind,

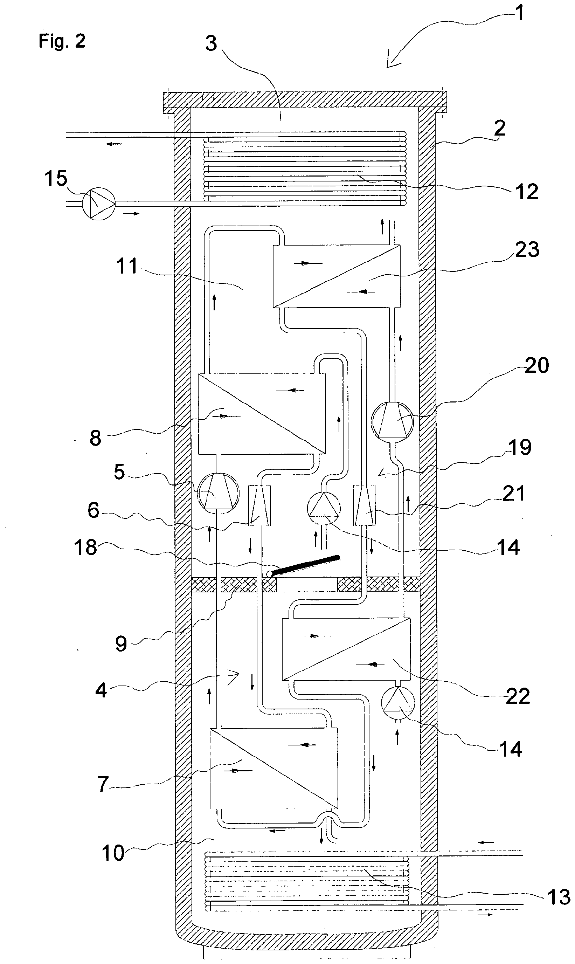

Fig. 2 eine Wärme- und Kältebereitstellungsvorrichtung bestehend aus einem Speicherbehälter gefüllt mit einem Wärmeträgermedium, wobei innerhalb des Speicherbehälters zwei Kreisprozessanlagen eingebaut sind und wobei die beiden Verdampfer und die beiden Kondensatoren der Kreisprozessanlagen jeweils mit einer Pumpe hydraulisch verbunden sind,

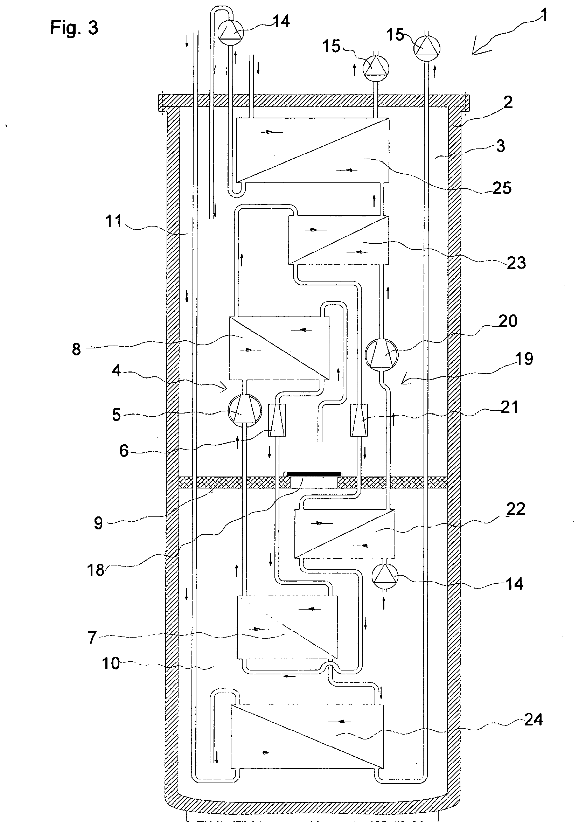

Fig. 3 eine Wärme- und Kältebereitstellungsvorrichtung welche sich von der in Fig. 2 abgebildeten Vorrichtung dadurch unterscheidet, dass der Wärmetauscher für die Wärmesenke und die Wärmequelle nicht als Rohrwendelwärmetauscher, sondern als Plattenwärmetauscher ausgeführt sind und von dem Wärmeträgermedium durchströmt werden,

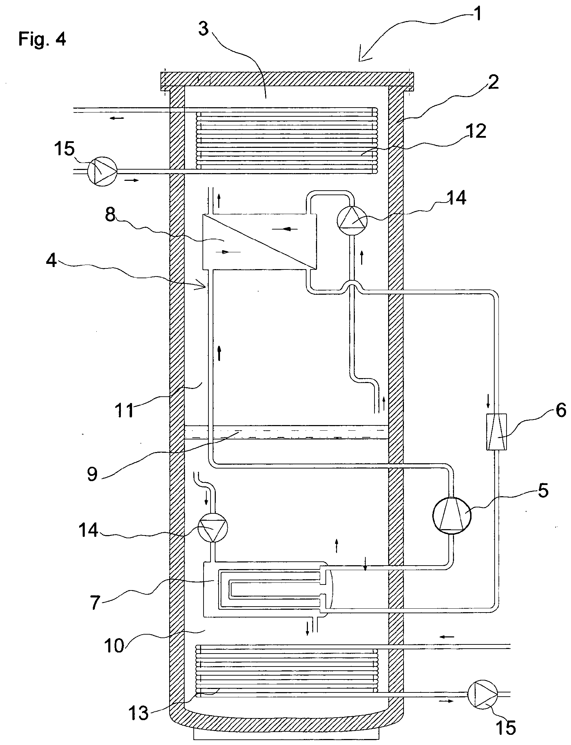

Fig. 4 eine schematisch dargestellte Wärme- und Kältebereitstellungsvorrichtung ähnlich der Vorrichtung in Fig. 1, wobei der Kompressor und die Drosseleinrichtung der Kreisprozessanlage außerhalb des Speicherbehälters angeordnet sind, und

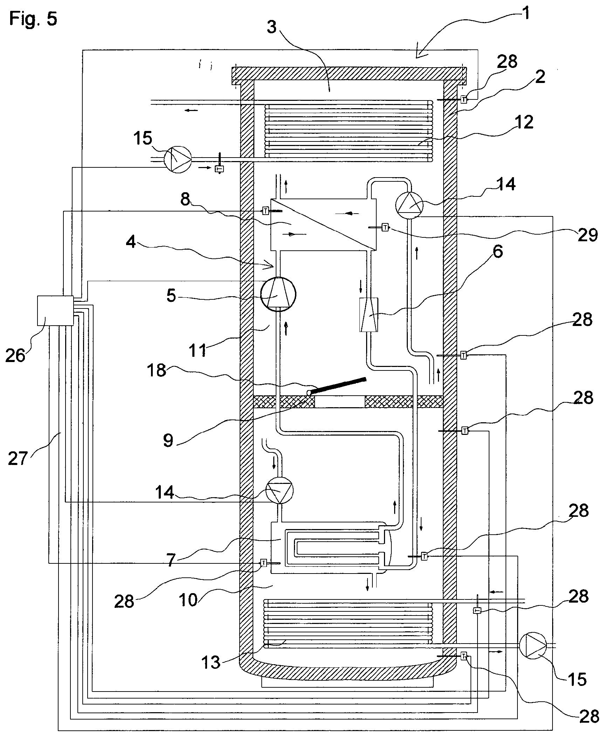

Fig. 5 eine schematisch dargestellte Wärme- und Kältebereitstellungsvorrichtung ähnlich der Vorrichtung in Fig. 1, wobei zusätzlich eine Steuereinrichtung, Signalübertragungsleitungen sowie Druck- und Temperaturfühler eingezeichnet sind.

Figur 1 zeigt eine Wärme- und Kältebereitstellungsvorrichtung 1 bestehend aus einem Speicherbehälter 2, welcher mit einem Wärmeträgermedium 3 gefüllt ist. Innerhalb des Speicherbehälters 2 ist eine Kreisprozessanlage 4 angeordnet. Die Kreisprozessanlage 4 ist schematisch dargestellt mit ihren Hauptkomponenten, nämlich mit einem Verdichter 5, mit einer Drossel 6 in der Funktion als Entspannungsventil, mit einem Verdampfer 7 und mit einem Kondensator 8. Der Speicherbehälter 2 ist durch eine Trennschicht 9 in einen unteren Bereich 10 und in einen oberen Bereich 11 aufgeteilt. Weiterhin ist ein Wärmetauscher 12 zum Anschluss an die Wärmesenke oben im Speicherbehälter 2 angeordnet. Ein weiterer Wärmetauscher 13 ist unten im Speicherbehälter zum Anschluss an die Wärmequelle angeordnet. Als Wärmequelle ist ein thermischer Solarkollektor 16 mit zuschaltbarem Luftwärmetauscher 17 dargestellt.

Die Kreisprozessanlage 4 kommt bei nicht ausreichenden Umweltwärmeerträgen zeitweilig zum Einsatz, dabei erhöht sich die Temperatur im oberen Bereich des Speichers und gleichzeitig sinkt die Rücklauftemperatur zu Wärmequellen 16, 17 mit dem Effekt einer größeren nutzbaren Temperaturspanne an den als Umweltwärmetauscher ausgebildeten Wärmequellen 16,17. Innerhalb des Speicherbehälters 2 befindet sich eine Trennschicht 9. Diese Trennschicht ermöglicht die Erhaltung einer Temperaturdifferenz zwischen dem oberen Bereich 11 innerhalb des Speicherbehälters 2 und dem unteren Bereich 10 innerhalb des Speicherbehälters 2 auch dann, wenn Umwälzpumpen 14 eingesetzt werden um das Wärmeträgermedium 3 durch die Wärmetauscher 7, 8 strömen zu lassen. Durch die Anordnung der jeweiligen Eintrittsöffnung und der dazugehörigen Austrittsöffnung der mit der jeweiligen Strömungserzeugungseinrichtung 14 verbundenen hydraulischen Leitungen wird gleichzeitig eine gezielte Anströmung anderer im Speicherbehälter 2 befindlichen Wärmestauscher 12, 13 mit dem Wärmeträgermedium erreicht. Für eine gezielte Anströmung von Wärmetauschern sind auch andere hier nicht eingezeichnete Hilfsmittel wie etwa Strömungsleitbleche dem Erfindungsgedanken folgend möglich.

Figur 2 zeigt eine schematisch dargestellte abweichende Ausgestaltung der Wärme- und Kältebereitstellungsvorrichtung 1 mit dem Speicherbehälter 2, der mit dem Wärmeträgermedium 3 gefüllt ist. Innerhalb des Speicherbehälters 2 sind die Kreisprozessanlage 4 und eine weitere Kreisprozessanlage 19 angeordnet. Die Kreisprozessanlage 4 ist dargestellt mit ihren Hauptkomponenten, einem Verdichter 5, einer Drossel 6 in der Funktion als Entspannungsventil, einem Verdampfer 7 und einem Kondensator 8. Der Speicherbehälter 2 ist durch die Trennschicht 9 in den unteren Bereich 10 und in den oberen Bereich 11 aufgeteilt. Innerhalb dieser Trennschicht 9 befindet sich eine Öffnung, welche mittels eines Ventils 18 beispielsweise in Form einer Klappe geschlossen werden kann. Weiterhin ist der Wärmetauscher 12 zum Anschluss an die Wärmesenke oben im Speicherbehälter 2 angeordnet. Der Wärmetauscher 13 ist unten im Speicherbehälter 2 zum Anschluss an die Wärmequelle angeordnet. Die Kreisprozessanlage 19 ist dargestellt mit ihren Hauptkomponenten, nämlich mit einem Verdichter 20, mit einer Drossel 21 in der Funktion als Entspannungsventil, mit einem Verdampfer 22 und mit einem Kondensator 23. Innerhalb des Speicherbehälters 2 befinden sich an den Verdampfern 7,22 und an den Kondensatoren 8,23 jeweils Strömungserzeugungseinrichtungen in Form von Umwälzpumpen 14. Beide Kreisprozessanlagen 4, 19 können weitgehend unabhängig voneinander in Betrieb genommen werden. Die Kopplung der beiden Kreisprozessanlagen 4, 19 als Kaskadenanordnung erfolgt sowohl auf der Seite der Verdampfer 7, 22 im unteren Bereich 10 des Speicherbehälters 2 als auch auf der Seite der Kondensatoren 8, 23 in dem oberen Bereich 11 des Speicherbehälters über die Umwälzung des Wärmeträgermediums 3 durch die hydraulisch verbundenen Wärmetauscher 7, 22 und 8,23 mittels der Strömungserzeugungseinrichtung 14.

In der in Fig. 2 beschriebenen Ausgestaltung der Erfindung ist für jeweils zwei Verdampfer und zwei Kondensatoren nur jeweils eine Strömungserzeugungseinrichtung 14 vorgesehen. Das bedingt, dass die Strömungserzeugungseinrichtung für den Betrieb nur einer Kreisprozessanlage auch immer die Wärmetauscher der zweiten Kreisprozessanlage durchströmt. Erfindungsgemäß ist auch der Einsatz einer Strömungserzeugungseinrichtung 14 für jeden Wärmetauscher 7, 22 und 8, 23 einzeln denkbar. Weiterhin ist innerhalb des Speicherbehälters 2 eine Trennschicht 9 angeordnet. Diese Trennschicht ist zusätzlich mit einer oder mehreren Öffnungen 18 versehen, welche verschließbar sind. Diese Öffnungen 18 ermöglichen eine steuerbare Konvektion des Wärmeträgermediums 3 von dem unteren Bereich 10 des Speicherbehälters 2 in den oberen Bereich 11. Durch die Öffnung der Trennschicht 9 kann der Speicherbehälter 2 beispielsweise auch ohne den Betrieb der Kreisprozessanlagen 4, 19 als Speicherbehälter für thermische Solaranlagen genutzt werden.

Erfindungsgemäß kann die Öffnung der Trennschicht 9 mittels beliebiger geeigneter Ventile 18 bzw. Klappen erreicht werden, beispielsweise durch mechanische oder elektromechanische Klappen, welche sich gezielt ansteuern lassen. Erfindungsgemäß ist auch eine thermisch gesteuerte Klappe mittels einer Bimetall-Feder denkbar. In diesem Fall ist eine Mindesttemperaturdifferenz zwischen dem oberen Bereich 11 und dem unteren Bereich 10 im Speicherbehälter 2 einstellbar. Erst die Erhaltung einer Temperaturdifferenz ermöglicht den Betrieb der Kreisprozessanlagen 4, 19.

Erfindungsgemäß ist auch eine poröse Trennschicht denkbar. Diese poröse Trennschicht dient dazu einer vergleichsweise langsamen thermischen Konvektion, welche durch die Dichteunterschiede des Wärmeträgermediums verursacht wird, weitgehend zuzulassen. Gleichzeitig werden die Strömungen des Wärmeträgermediums 3, welche durch die Strömungserzeugungseinrichtungen 14 verursacht werden, weitgehend an der porösen Trennschicht abgelenkt. Erfindungsgemäß kann diese poröse Trennschicht aus einem Lochblech, einem Filterflies, gummiartigem porösen Material oder jedem anderen geeigneten durchlässigem Material bestehen.

Figur 3 zeigt eine wiederum abweichend ausgestaltete und schematisch dargestellte Wärme- und Kältebereitstellungsvorrichtung 1 bestehend aus dem Speicherbehälter 2, welcher mit dem Wärmeträgermedium 3 gefüllt ist. Innerhalb des Speicherbehälters 2 sind zwei Kreisprozessanlage 4, 19 angeordnet. Die Kreisprozessanlagen 4, 19 sind jeweils mit ihren Hauptkomponenten, den Verdichtern 5, 20; den Drosseln 6, 21, den Verdampfern 7, 22 und den Kondensatoren 8, 23 dargestellt. Der Speicherbehälter 2 ist durch die Trennschicht 9 in den unteren Bereich 10 und in den oberen Bereich 11 aufgeteilt. Innerhalb dieser Trennschicht 9 befindet sich eine Öffnung, welche mittels des Ventils 18 geschlossen und geöffnet werden kann. Weiterhin ist ein Wärmetauscher 25 zum Anschluss an die Wärmesenke oben im Speicherbehälter 2 angeordnet. Ein Wärmetauscher 24 ist unten im Speicherbehälter zum Anschluss an die Wärmequelle angeordnet. Im Unterschied zu Fig. 2 sind hier auch die Wärmetauscher 24 und 25 als Plattenwärmetauscher dargestellt. Die Umwälzung des Wärmeträgermediums 3 wird hier im oberen Bereich 11 des Speicherbehälters 2 durch eine außerhalb angeordnete Umwälzpumpe 14 erreicht. Im unteren Bereich des Speicherbehälters 10 wird die Durchströmung des Wärmetauschers 24 durch eine innerhalb des Speicherbehälters angeordnete Umwälzpumpe 24 erreicht. Die Wärmetauscher 24, 25, welche jeweils an die Wärmesenke 25 und die Wärmequelle 24 hydraulisch angeschlossen und mit den Umwälzpumpen 14 verbunden sind.

Erfindungsgemäß wird in dieser Ausführung der Erfindung die Verwendung von geschlossenen und besonders effizienten Wärmetauschern wie Rohrbündelwärmetauschern oder Plattenwärmetauschern innerhalb eines Speicherbehälters 2 ermöglicht. Dabei ist auch der Einsatz mehrerer Strömungserzeugungseinrichtungen 14 zur separaten Umwälzung des Speichermediums 3 in den einzelnen Wärmetauschern möglich.

Fig. 4 zeigt eine schematisch dargestellte Wärme- und Kältebereitstellungsvorrichtung 1 ähnlich zu Fig. 1. Im Unterschied zu Fig.1 sind einige Komponenten der Kreisprozessanlage 4 wie Verdichter 5 und Drossel 6 außerhalb des Speicherbehälters 2 angeordnet.

Fig. 5 zeigt eine im Wesentlichen den bereits vorangehend beschriebenen Vorrichtungen entsprechende Wärme- und Kältebereitstellungsvorrichtung. Zusätzlich sind hier eine Steuerungseinrichtung 26, Signalübertragungsleitungen 27, Temperatursensoren 28 und Drucksensoren 29 dargestellt. Die Steuerungseinrichtung (26) kann in Abhängigkeit von Parametern, die von den Temperatursensoren (28) und den Drucksensoren (29) übermittelt bzw. in der Steuerungseinrichtung ermittelt werden, die Intensität des Wärmeaustausches aller Wärmetauscher mit dem Wärmeträgermedium innerhalb des Speicherbehälters regeln. Die Anpassung des Wärmeaustausches erfolgt über den Betrieb und die Geschwindigkeit der Anströmung der Wärmetauscher mit dem Wärmeträgermedium (3) durch die Strömungserzeugungseinrichtungen (14). Durch die Öffnung des Ventiles (18) in der Trennschicht (9) erreicht die Steuerungseinrichtung (26) eine Angleichung der Temperatur zwischen einem oberen Bereich (11), und einem unteren Bereich (10) des Speicherbehälters (2). Diese Steuerungsmaßnahme ermöglicht den Betrieb der Kreisprozessanlage mit einem dann niedrigeren Temperaturhub.

## Patentansprüche

1. Wärme- und Kältebereitstellungsvorrichtung (1) mit einem Wärmeträgermedium (3), das in einem Innenraum eines Speicherbehälters (2) angeordnet ist, wobei in dem Innenraum des Speicherbehälters (2) mindestens ein Wärmetauscher (7, 8, 22, 23) als Kondensator (7, 22) oder als Verdampfer (8, 23) einer Kreisprozessanlage (4) angeordnet ist, wobei die Wärme- und Kältebereitstellungsvorrichtung (1) mindestens eine Strömungserzeugungseinrichtung (14) aufweist, mit der an dem mindestens einen Wärmetauscher (7, 8, 22, 23) an mindestens einer seiner wärmeaustauschenden Oberflächen eine verstärkte thermische Konvektion des Wärmeträgermediums (3) herbeigeführt werden kann, **dadurch gekennzeichnet, dass** mindestens eine Trennschicht (9) innerhalb des Speicherbehälters (2) den Innenraum des Speicherbehälters (2) in mindesten zwei Bereiche (10, 11) unterteilt und die Strömungen des Wärmeträgermediums (3) voneinander trennt, sodass die durch Temperaturunterschiede verursachte natürliche Konvektion und die durch die mindestens eine Strömungserzeugungseinrichtung (14) verursachte thermische Konvektion in beiden Bereichen (10, 11) des Speicherbehälters (2) unabhängig voneinander sind.

2. Wärme- und Kältebereitstellungsvorrichtung (1) gemäß Anspruch 1, **dadurch gekennzeichnet, dass** mindestens einer der Wärmetauscher (7, 8, 22, 23) mindestens zwei voneinander getrennte und unterschiedliche Kammervolumen aufweist, welche von Wärmeträgermedien (3) getrennt durchströmt werden können.

3. Wärme- und Kältebereitstellungsvorrichtung (1) gemäß Anspruch 1 oder Anspruch 2, wobei mindestens zwei Wärmetauscher (7, 8, 22, 23) in dem Innenraum des Speicherbehälters (2) angeordnet sind und mindestens zwei Wärmetauscher als Verdampfer (7, 22) oder mindestens zwei Wärmetauscher als Kondensator (8, 23) von mindestens zwei Kreisprozessanlagen (4, 19) vorgesehen sind, und wobei die mindestens eine Strömungserzeugungseinrichtung (14) so angeordnet ist, dass mindestens zwei Wärmetauscher (7, 8, 22, 23) durch eine von der mindestens einen Strömungserzeugungseinrichtung (14) verstärkten thermischen Konvektion ausgesetzt werden.

4. Wärme- und Kältebereitstellungsvorrichtung (1) gemäß einem der voranstehenden Ansprüche, **dadurch gekennzeichnet, dass** mindestens eine Trennschicht (9) eine drosselbare Durchlassöffnung für das Wärmeträgermedium aufweist, die durch eine Material- oder eine Formgebung innerhalb des Speicherbehälters (2) das Wärmeträgermedium (3) für eine thermische Konvektion infolge der Schwerkraft teilweise durchlässig macht, jedoch gleichzeitig die durch Strömungserzeugungseinrichtungen (14) verursachten thermischen Konvektionsströmungen des Wärmeträgermediums (3) bei dem Durchströmen der Trennschicht behindert.

5. Wärme- und Kältebereitstellungsvorrichtung (1) gemäß einem der voranstehenden Ansprüche, **dadurch gekennzeichnet, dass** die mindestens eine Trennschicht (9) mindestens eine verschließbare Öffnung (18) aufweist, wobei die Öffnung (18) mit einer Verschlusseinrichtung wie beispielsweise einem Ventil oder einer Klappe versehen ist, welche gesteuert oder geregelt geöffnet und teilweise oder vollständig geschlossen werden kann.

6. Verfahren zum Betreiben einer Wärme- und Kältebereitstellungsvorrichtung (1) mit einem Wärmeträgermedium (3), das in einem Innenraum eines Speicherbehälters (2) angeordnet ist, wobei im Innenraum des Speicherbehälters (2) mindestens ein Wärmetauscher (7, 8) als Kondensator (7) oder als Verdampfer (8) einer Kreisprozessanlage (4) angeordnet ist, wobei mit einer Strömungserzeugungseinrichtung (14) eine hinsichtlich der Intensität und der Richtung steuerbare Beströmung erzeugt wird, mit der die Intensität des Wärmeaustausches des mindestens einen Wärmetauschers (7, 8) mit dem diesen umgebenden Wärmeträgermedium (3) beeinflusst wird, **dadurch gekennzeichnet, dass** die Wärme- und Kältebereitstellungsvorrichtung (1) mindestens eine Trennschicht (9) aufweist, die den Speicherbehälter (2) in mindestens zwei Bereiche unterteilt und diese Trennschicht (9) mit mindestens einer verschließbaren Öffnung (18) versehen ist, die durch eine Verschlusseinrichtung, insbesondere durch Ventile, verschließbar ist, wobei die Verschlusseinrichtung der Öffnung (18) mittels einer Steuerungseinrichtung (26) steuerbar ist, wobei die mindestens eine Öffnung der Trennschicht (9) durch die Steuerungseinrichtung (26) in Abhängigkeit von den über Temperatursensoren (28) übermittelten Parametern eine Temperaturangleichung des Wärmeträgermediums (3) zwischen den durch die Trennschicht (9) geteilten Bereichen (10, 11) des Speicherbehälters (2) herbeiführt.

7. Verfahren zum Betreiben einer Wärme- und Kältebereitstellungsvorrichtung (1) nach Anspruch 6, wobei in dem Innenraum des Speicherbehälters (2) mindestens zwei Wärmetauscher (7, 8, 22, 23) als Kondensator (7, 22) oder als Verdampfer (8, 23) von mindesten zwei Kreisprozessanlage (4, 19) angeordnet sind, welche mit der Strömungserzeugungseinrichtung (14) von dem Wärmeträgermedium (3) angeströmt werden können, **dadurch gekennzeichnet, dass** die Strömungserzeugungseinrichtung (14) eine hinsichtlich der Intensität und der Richtung steuerbare Beströmung erzeugt, mit der die Intensität des Wärmeaustausches der mindestens zwei Wärmetauscher (7, 8, 22, 23) mit dem diese umgebenden Wärmeträgermedium (3), beeinflusst wird.

8. Verfahren zum Betreiben einer Wärme- und Kältebereitstellungsvorrichtung (1) gemäß Anspruch 7, **dadurch gekennzeichnet, dass** die Steuerungseinrichtung (26) die Intensität der Wärmeübertragung zwischen allen im Speicherbehälter (2) befindlichen Wärmetauschern durch den Betrieb der mindestens einen Strömungserzeugungseinrichtung (14) variiert.

## Claims

1. A device for providing heat and cold (1) having a heat transfer medium (3) which is arranged in an inner space of the storage container (2), wherein at least one heat exchanger (7, 8, 22, 23) is arranged in the inner space of the storage container (2) as a condenser (7, 22) or as an evaporator (8, 23) of a cycle process system (4), wherein the device for providing heat and cold (1) comprises at least one flow generation device (14), by means of which an intensified thermal convection of the heat transfer medium (3) can be caused on the at least one heat exchanger (7, 8 22, 23) on at least one of its heat-exchanging surfaces, **characterized in that** at least one separating layer (9) inside the storage container (2) divides the inner space of the storage container (2) into at least two regions (10, 11) and separates the flows of the heat transfer medium (3) from one another in such a way that the natural convection caused by temperature differences and the thermal convection caused by the at least one flow generating device (14) are independent from one another in both regions (10, 11) of the storage container (2).

2. The device for providing heat and cold (1) according to claim 1, **characterized in that** at least one of the heat exchangers (7, 8, 22, 23) has at least two chamber volumes separate and different from one another, which can be flown-through by heat transfer media (3) separately.

3. The device for providing heat and cold (1) according to claim 1 or claim 2, wherein at least two heat exchangers (7, 8, 22, 23) are arranged in the inner space of the storage container (2) and at least two heat exchangers are provided as evaporators (7, 22) or at least two heat exchangers are provided as condensers (8, 23) of at least two cycle process systems (4, 19), and wherein the at least one flow generating device (14) is arranged in such a way that at least two heat exchangers (7, 8, 22, 23) are exposed to a thermal convection intensified by the at least one flow generating device (14).

4. The device for providing heat and cold (1) according to one of the preceding claims, **characterized in that** at least one separating layer (9) comprises a restrictable trough-opening for the heat transfer medium which, due to a given material or shape inside the storage container (2), makes the heat transfer medium (3) partially permeable for a thermal convection resulting from gravity, but at the same time obstructs thermal convection flows of the heat transfer medium (3) caused by the flow generating devices (14) through the separating layer.

5. The device for providing heat and cold (1) according to one of the preceding claims, **characterized in that** at least one separating layer (9) comprises at least one closable opening (18), wherein the opening (18) is provided with a closing device such as a valve or a flap, which can be opened in a controlled or regulated manner and can be partially or completely closed.

6. A method for operating a device for providing heat and cold (1) having a heat transfer medium (3) which is arranged in an inner space of a storage container (2), wherein at least one heat exchanger (7, 8) is arranged as a condenser (7) or as an evaporator (8) of a cycle process system (4) in an inner space of the storage container (2), wherein a flow which is controllable in terms of intensity and direction is generated with a flow generation device (14), by means of which intensity of heat exchange of the at least one heat exchanger (7, 8) is influenced by means of the heat transfer medium (3) surrounding this heat exchanger, **characterized in that** the device for providing heat and cold (1) comprises at least one separating layer (9) dividing the storage container (2) into at least two regions and this separating layer (9) is provided with at least one closable opening (18) which is closable by means of a closing device, in particular by valves, wherein the closing device of the opening (18) is controllable by means of a control device (26), wherein the at least one opening of the separating layer (9) causes a temperature adaption of the heat transfer medium (3) between the regions (10,11) separated by the separating layer (9) of the storage container (2) in accordance with parameters transmitted via temperature sensors (28).

7. The method for operating a device for providing heat and cold (1) according to claim 6, wherein at least two heat exchangers (7, 8, 22, 23) are arranged in the inner space of the storage container (2) as condensers (7, 22) or as evaporators (8, 23) of at least two cycle process systems (4, 19), which can be flown by the heat transfer medium (3) with the flow generation device (14), **characterized in that** the flow generating device (14) generates a flow which is controllable in terms of intensity and direction, by means of which intensity of heat exchange of the at least two heat exchangers (7, 8, 22, 23) is influenced by the heat transfer medium (3) surrounding them.

8. The method for operating a device for providing heat and cold (1) according to claim 7, **characterized in that** the control device (26) varies the intensity of the heat transfer between all heat exchangers located in the storage container (2) by operating the at least one flow generating device (14).

## Revendications

1. Dispositif de fourniture de chaleur et de froid (1) comprenant un fluide caloporteur (3) qui est disposé dans un espace intérieur d'un réservoir de stockage (2), au moins un échangeur de chaleur (7, 8, 22, 23) étant disposé dans l'espace intérieur du réservoir de stockage (2) en tant que condensateur (7, 22) ou en tant qu'évaporateur (8, 23) d'une installation à circuit fermé (4), le dispositif de fourniture de chaleur et de froid (1) présentant au moins un dispositif générateur de flux (14), avec lequel une convexion thermique renforcée du fluide caloporteur (3) peut être réalisée sur l'au moins un échangeur de chaleur (7, 8, 22, 23) sur au moins une de ses surfaces d'échange de chaleur, **caractérisé en ce qu'**au moins une couche de séparation (9) située à l'intérieur du réservoir de stockage (2) divise l'espace intérieur du réservoir de stockage (2) en au moins deux zones (10, 11) et sépare les uns des autres les flux du fluide caloporteur (3) de sorte que la convexion naturelle due aux différences de température et la convexion thermique causée par l'au moins un dispositif générateur de flux (14) sont indépendantes l'une de l'autre dans les deux zones (10, 11) du réservoir de stockage (2).

2. Dispositif de fourniture de chaleur et de froid (1) selon la revendication 1, **caractérisé en ce qu'**au moins un des échangeurs de chaleur (7, 8, 22, 23) présente au moins deux volumes de chambre différents et séparés les uns des autres, lesquels peuvent être traversés de manière séparée par le fluide caloporteur (3),

3. Dispositif de fourniture de chaleur et de froid (1) selon la revendication 1 ou la revendication 2, au moins deux échangeurs de chaleur (7, 8, 22, 23) étant disposés dans l'espace intérieur du réservoir de stockage (2) et au moins deux échangeurs de chaleur étant ménagés en tant qu'évaporateur (7, 22) ou au moins deux échangeurs de chaleur étant ménagés en tant que condensateur (8, 23) d'au moins deux installations à circuit fermé (4, 19), et l'au moins un dispositif générateur de flux (14) étant disposé de manière à ce qu'au moins deux échangeurs de chaleur (7, 8, 22, 23) soient exposés à une convexion thermique renforcée par l'un de l'au moins un dispositif générateur de flux (14).

4. Dispositif de fourniture de chaleur et de froid (1) selon l'une quelconque des revendications précédentes, **caractérisé en ce qu'**au moins une couche de séparation (9) présente une ouverture de passage pouvant être restreinte pour le fluide caloporteur, laquelle, en raison d'une matière utilisée ou d'une conception à l'intérieur du réservoir de stockage (2), rend le fluide caloporteur (3) en partie perméable pour une convexion thermique due à la pesanteur, cependant empêche simultanément les flux de convexion du fluide caloporteur (3), causés par les dispositifs générateurs de flux (14), lors de la traversée de la couche de séparation.

5. Dispositif de fourniture de chaleur et de froid (1) selon l'une quelconque des revendications précédentes, **caractérisé en ce que** l'au moins une couche de séparation (9) présente au moins une ouverture (18) pouvant être fermée, l'ouverture (18) étant munie d'un dispositif de fermeture, comme par exemple une vanne ou un clapet, lequel peut être ouvert et fermé en partie ou complètement de manière commandé ou réglée.

6. Procédé de fonctionnement d'un dispositif de fourniture de chaleur et de froid (1) comprenant un fluide caloporteur (3) qui est disposé dans un espace intérieur d'un réservoir de stockage (2), au moins un échangeur de chaleur (7, 8, 22, 23) étant disposé dans l'espace intérieur du réservoir de stockage (2) en tant que condensateur (7, 22) ou en tant qu'évaporateur (8, 23) d'une installation à circuit fermé (4), un flux commandable quant à l'intensité et à la direction étant généré à l'aide d'un dispositif générateur de flux (14), avec lequel flux l'intensité de l'échange de chaleur de l'au moins un échangeur de chaleur (7, 8) avec le fluide caloporteur (3) entourant celui-ci est influencée, **caractérisé en ce que** le dispositif de fourniture de chaleur et de froid (1) présente au moins une couche de séparation (9) qui divise le réservoir de stockage (2) en au moins deux zones et **en ce que** cette couche de séparation (9) est munie d'au moins une ouverture (18) pouvant être fermée, laquelle peut être fermée au moyen d'un dispositif de fermeture, notamment au moyen de vannes, le dispositif de fermeture de l'ouverture (18) étant commandable au moyen d'un dispositif de commande (26), l'au moins une ouverture de la couche de séparation (9) entraînant, au moyen du dispositif de commande (26), une adaptation de température du fluide caloporteur (3) entre les zones (10, 11) du réservoir de stockage (2), séparées par la couche de séparation (9), en fonction des paramètres transmis par l'intermédiaire de capteurs de température (28).

7. Procédé de fonctionnement d'un dispositif de fourniture de chaleur et de froid (1) selon la revendication 6, au moins deux échangeurs de chaleur (7, 8, 22, 23) étant disposés dans l'espace intérieur du réservoir de stockage (2) en tant que condensateur (7, 22) ou en tant qu'évaporateur (8, 22) d'au moins deux installations à circuit fermé (4, 19), lesquelles peuvent être traversées par le fluide caloporteur (3) à l'aide du dispositif générateur de flux (14), **caractérisé en ce que** le dispositif générateur de flux (14) génère un flux commandable quant à l'intensité et à la direction, avec lequel l'intensité de l'échange de chaleur des au moins deux échangeurs de chaleur (7, 8, 22, 23) avec le fluide caloporteur (3) entourant ceux-ci est influencée.

8. Procédé de fonctionnement d'un dispositif de fourniture de chaleur et de froid (1) selon la revendication 7, **caractérisé en ce que** le dispositif de commande (26) varie l'intensité du transfert de chaleur entre tous les échangeurs de chaleur se trouvant dans le réservoir de stockage (2) en raison du fonctionnement de l'au moins un dispositif générateur de flux (14).
